# EUROPÄISCHE PATENTANMELDUNG

(11) **EP 1 748 214 A2**
(43) Veröffentlichungstag der Anmeldung: **31.01.2007**
(21) Anmeldenummer: 06008638.6
(22) Anmeldetag: 26.04.2006
(51) Int. Cl.: F16D 66/02

(54) **Vorrichtung zur Verschleissfreien Erfassung der Abnutzung eines Bremsbelages eines Fahrzeuges**

(30) Priorität: 27.07.2005 DE 202005011781 U
(71) Anmelder: Hirschmann Automotive GmbH, 6830 Rankweil-Brederis (AT)
(72) Erfinder: Ludwig, Helmuth, 6840 Götzis (AT); Schmid, Martin, 6830 Frastanz (AT)
(74) Vertreter: Thul, Hermann

(57) **Zusammenfassung**

Vorrichtung zur Erfassung der Abnutzung zumindest eines Bremsbelages (2) einer Bremsanlage eines Fahrzeuges, wobei erfindungsgemäß vorgesehen ist einen Sensor (4), der die Stellung bzw. den zurückgelegten Weg eines den Bremsbelag (2) aufnehmenden Bremssattels (3) in Bezug auf einen Fixpunkt an einem Fahrwerksteil erfasst, wobei die erfasste Stellung ein verschleißfrei erfassbares und kontinuierlich darstellbares Maß für die Abnutzung des Bremsbelages (2) ist.

## Beschreibung

Die Erfindung betrifft eine Vorrichtung zur Erfassung der Abnutzung zumindest eines Bremsbelages eines Fahrzeuges gemäß dem Oberbegriff des Schutzanspruchs 1.

Aus der DE 41 39 546 A1 ist ein System zum Erkennen des Verschleißes eines Bremsbelages einer Bremse eines Fahrzeuges bekannt. Hierbei wird ein Sensor in den Bremsbelag eingebettet, der aus wenigstens parallel liegenden stromdurchflossenen Widerständen besteht, die bei fortschreitendem Belagverschleiß zeitlich nacheinander unwirksam werden, wobei dies einer Auswerte-Elektronik mitgeteilt wird, die die Änderung des wirksamen Widerstandes auswertet und eine Anzeige bewirkt und/oder einen Steuereingriff auslöst. Mit kontinuierlichem Betrieb der Bremse, insbesondere der Scheibenbremse, wird der Sensor direkt mit dem Bremsbelag verschlissen und muss dann, wenn der Bremsbelag eine vorgeschriebene Mindestdicke unterschritten hat, mit dem Bremsbelag zusammen ausgewechselt werden. Dies ist einerseits kostenintensiv, da ein hochtemperaturfester Sensor in den Bremsbelag mit eingebaut werden muss. Auf Grund der hierfür erforderlichen Materialien steigen damit die Kosten für diesen Sensor. Andererseits kann auf Grund der gestuften Widerstände nur ein diskretes, aber kein kontinuierliches Ausgangssignal erzielt werden. Ein weiterer Nachteil besteht darin, dass immer beim Auswechseln des Bremsbelages der vollständige Sensor mit ausgewechselt werden muss, wobei nach dem Einbau eines neuen Bremsbelages mit integriertem Sensor dieser integrierte Sensor über eine Steckverbindung an eine ortsfeste, im Fahrwerksbereich angeordnete Gegensteckverbindung kontaktiert werden muss, wobei die Gefahr besteht, dass eine solche Kontaktierung unterbleibt und damit der Auswerteelektronik kein Signal über den Verschleiß des Bremsbelages zur Verfügung steht.

Der Erfindung liegt daher die Aufgabe zu Grunde, ein Verfahren und eine Vorrichtung zur verschleißfreien und kontinuierlichen Erfassung der Abnutzung eines Bremsbelages einer Bremse eines Fahrzeuges bereitzustellen, mit dem die eingangs geschilderten Nachteile vermieden werden.

Erfindungsgemäß ist diese Aufgabe durch eine Vorrichtung gemäß Schutzanspruch 1 gelöst.

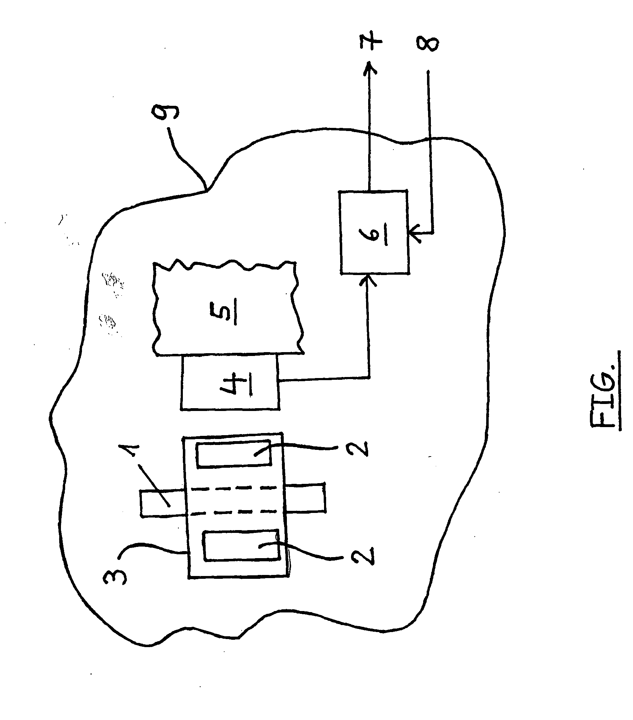

Die Vorrichtung ist durch einen Sensor gekennzeichnet, der die Stellung eines den Bremsbelag aufnehmenden Bremssattels in Bezug auf einen Fixpunkt an einem Fahrwerksteil erfasst, wobei die von dem Sensor erfasste Stellung ein verschleißfrei erfassbares und kontinuierlich darstellbares Maß für die Abnutzung des Bremsbelages ist. Ein solches Ausführungsbeispiel einer Vorrichtung, auf die die Erfindung jedoch nicht beschränkt ist, ist im Folgenden beschrieben und anhand der Figur erläutert.

In der Figur ist schematisch und vereinfacht die Bremsanlage eines Fahrzeuges dargestellt, wobei eine Bremsscheibe 1 von zwei Bremsbelägen 2 (oder auch mehr als zwei oder weniger als zwei) umgeben ist. Die Bremsscheibe 1 sowie der Bremsbelag 2 sind in an sich bekannter Weise in einem am Fahrwerk des Fahrzeuges angeordneten Bremssattels 3 dargestellt.

Erfindungsgemäß ist nun ein Sensor 4 vorgesehen, der in Bezug auf einen Fixpunkt an einem Fahrwerksteil des Fahrzeuges die Veränderung der Stellung des Bremssattels 3 erfasst. Auf Grund der konstanten Beziehung zwischen der Abnutzung des Bremsbelages 2 und der Stellung des Bremssattels 3 kann über diese gemessene Stellung des Bremssattels 3 bzw. seines zurückgelegten Weges in Bezug auf den Fixpunkt (der hier beispielsweise schematisch als Achsschenkel 5 dargestellt ist) auf einen Verschleiß des zumindest einen Bremsbelages 2 geschlossen werden. Die durch den Sensor 4 erfasste Stellung (bzw. den zurückgelegten Weg) des Bremssattels 3 wird an eine Auswerteeinheit 6 übermittelt, die z.B. das Ausgangssignal des Sensors 4 aufbereitet und ihrerseits ein Ausgangssignal 7 erzeugt, welches zumindest einer weiteren Steuereinheit (z.B. einem ABS-System oder einem Bordcomputer des Fahrzeuges) weiterleitet. Zusätzlich zu der Leitung, über die die Auswerteeinheit 6 das Ausgangssignal 7 an eine weitere Steuereinheit abgibt, kann die Auswerteeinheit 6 noch einen Eingang für ein Eingangssignal 8 aufweisen. Hierbei werden der Auswerteeinheit 6 externe Parameter (z.B. von dem ABS-Steuersystem) zugeführt, um das Roh-Ausgangssignal des Sensors 4 zu bewerten, insbesondere in Hinblick darauf, ob überhaupt ein Ausgangssignal des Sensors 4 vorliegt oder nicht, denn bei einer Beschädigung des Sensors oder einer Unterbrechung oder eines Kurzschlusses des Ausgangssignales des Sensors 4 ist es denkbar, dass an der Auswerteeinheit 6 überhaupt kein Signal des Sensors 4 anliegt. Hierbei ist es weiterhin denkbar, dass der Auswerteeinheit 6 nur eine Schnittstelle zur Verfügung steht, über die die Eingangs- und Ausgangssignale (und gegebenenfalls eine Stromversorgung) zugeführt bzw. übertragen werden.

In besonders vorteilhafter Weise sind nicht nur Sensor 4 im Bereich eines Radkastens 9 angeordnet, sondern auch die Auswerteeinheit 6, wobei in einer weiteren besonders vorteilhaften Ausgestaltung der Sensor 4 in der Auswerteeinheit 6 integriert ist, so dass diese eine kompakte Baueinheit bilden, die im Fahrwerksbereich (innerhalb des Radkastens 9) problemlos montiert und verkabelt werden kann.

Zusammenfassend ist vorgesehen, dass eine Messung der Stellung eines den Bremsbelag aufnehmenden Bremssattels in Bezug auf einen Fixpunkt an einem Fahrwerksteil erfolgt, wobei die erfasste Stellung ein verschleißfrei erfassbares und kontinuierlich darstellbares Maß für die Abnutzung des Bremsbelages ist. Denn es hat sich gezeigt, dass die Abnutzung des Bremsbelages und die Stellung des Bremssattels in einer konstanten Beziehung zueinander stehen. Wenn nun die Stellung des Bremssattels zu einem Fixpunkt am Fahrwerksteil, wie z.B. ein Achsschenkel, über eine Wegmessung ausgewertet wird, kann auf Grund dieser Messung direkt auf den Verschleiß des Bremsbelages geschlossen werden. Der Sensor zur Stellungs- bzw. Wegmessung des Bremssattels bleibt auch bei einem Austausch des Bremsbelages erhalten, so dass dadurch einfache, vor allen Dingen ohne integrierten Sensor ausgestaltete Bremsbeläge verwendet werden können. Ebenso hat die Wegmessung bzw. die Messung der Stellung des Bremssattels zu einem Fahrwerksteil den Vorteil, dass ein kontinuierlich darstellbares Maß für den Verschleiß des Bremsbelages vorliegt. Hier kann gegebenenfalls aus der zeitlichen Änderung der erfassten Stellung bzw. des erfassten Weges ein nahender Verschleiß des Bremsbelages geschlossen werden. Auf Grund des kontinuierlich darstellbaren Signales kann ohne weiteres das Erreichen und/oder Überschreiten einer vorgebbaren Stellung erfasst werden, wobei auch auf Grundlage weiterer Parameter wie z.B. die Wegstrecke bis zu einer nächsten Inspektion ein zwar dann noch nicht erforderlicher Wechsel des Bremsbelages zum Zeitpunkt der Inspektion schon vorgenommen werden. Grundsätzlich ist aber das Erreichen bzw. das Überschreiten einer vorgebbaren Stellung bzw. das Zurücklegen eines vorgegebenen Weges durch den Bremssattel ein Maß für einen abgenutzten Bremsbelag, so dass dadurch ein Hinweis gegeben ist, dass der Bremsbelag ausgewechselt werden muss. In diesem Fall wird ein Signal erzeugt, insbesondere ein optisch und/oder akustisch anzeigbares Signal, welches einer Steuereinheit oder auch dem Fahrer den Hinweis auf die Notwendigkeit des Bremsbelagwechsels gibt.

### Bezugszeichenliste

- 1.: Bremsscheibe
- 2.: Bremsbelag
- 3.: Bremssattel
- 4.: Sensor
- 5.: Achsschenkel
- 6.: Auswerteeinheit
- 7.: Ausgangssignal
- 8.: Eingangssignal
- 9.: Radkasten

## Patentansprüche

1. Vorrichtung zur Erfassung der Abnutzung zumindest eines Bremsbelages (2) einer Bremsanlage eines Fahrzeuges, **gekennzeichnet durch** einen Sensor (4), der die Stellung bzw. den zurückgelegten Weg eines den Bremsbelag (2) aufnehmenden Bremssattels (3) in Bezug auf einen Fixpunkt an einem Fahrwerksteil erfasst, wobei die erfasste Stellung ein verschleißfrei erfassbares und kontinuierlich darstellbares Maß für die Abnutzung des Bremsbelages (2) ist.

2. Vorrichtung nach Anspruch 1, **dadurch gekennzeichnet, dass** der Fixpunkt ein Achsschenkel (5) des Fahrwerkes des Fahrzeuges ist.

3. Vorrichtung nach Anspruch 1 oder 2, **dadurch gekennzeichnet, dass** der Sensor (4) mit einer Auswerteeinheit (6) verschaltet ist, die das Ausgangssignal des Sensors (4) auswertet und ein Signal (7) erzeugt, das ein Maß für die Abnutzung des Bremsbelages (2) ist.

4. Vorrichtung nach einem der Ansprüche 1-3, **dadurch gekennzeichnet, dass** der Sensor (4) und die Auswerteeinheit (6) im Bereich des Fahrwerkes innerhalb eines Radkastens (9) angeordnet sind.

5. Vorrichtung nach einem der vorhergehenden Ansprüche, **gekennzeichnet durch** eine Messung der Stellung eines den Bremsbelag (2) aufnehmenden Bremssattels (3) in Bezug auf einen Fixpunkt an einem Fahrwerksteil, wobei die erfasste Stellung ein verschleißfrei erfassbares und kontinuierlich darstellbares Maß für die Abnutzung des Bremsbelages (2) ist.

6. Vorrichtung nach Anspruch 5, **dadurch gekennzeichnet, dass** der Fixpunkt des Fahrwerkteiles ein Achsschenkel (5) des Fahrwerkes des Fahrzeuges ist.

7. Vorrichtung nach Anspruch 5 oder 6, **dadurch gekennzeichnet, dass** das Erreichen und/oder Überschreiten einer vorgebbaren Stellung bzw. Weges ein Maß für einen abgenutzten Bremsbelag (2) ist, der ausgewechselt werden muss.

8. Vorrichtung nach Anspruch 5, 6 oder 7, **dadurch gekennzeichnet, dass** das Erreichen und/oder Überschreiten einer vorgebbaren Stellung oder eines Weges ein Signal (7), insbesondere ein optisch und/oder akustisch anzeigbares Signal, auslöst, das auf einen abgenutzten und auszuwechselnden Bremsbelag hinweist.
